# EUROPÄISCHE PATENTANMELDUNG

(11) **EP 0 938 036 A2**
(43) Veröffentlichungstag der Anmeldung: **25.08.1999**
(21) Anmeldenummer: 99102258.3
(22) Anmeldetag: 05.02.1999
(51) Int. Cl.: G06F 1/00, G06F 11/34

(54) **Verfahren zur Kontrolle der Tätigkeit von Personen, die an einzelnen oder vernetzten Computern arbeiten**

(30) Priorität: 20.02.1998 DE 19807138
(71) Anmelder: Laube, Klaus-Peter, 66687 Wadern (DE)
(72) Erfinder: Laube, Klaus-Peter, 66687 Wadern (DE)

(57) **Zusammenfassung**

Die Erfindung betrifft ein Verfahren zur Kontrolle der Tätigkeit von Personen, die an einzelnen oder vernetzten Computern arbeiten.
Bei Computer-Arbeisplätzen, die über eine reine Dateneingabe hinaus auch kreative Leistungen beinhalten besteht das Problem, wie die Tätigkeit an ihnen sinnvoll kontrolliert werden kann. Die heute bekannten Kontrollmethoden über die Erfassung der Arbeitszeit der Mitarbeiter sind mit gravierenden Nachteilen behaftet und eignen sich nicht für Telearbeitsplätze.
Gegenstand der Erfindung ist ein Verfahren, das die vom Personal angestoßenen Programmaktionen direkt überwacht. Dazu läuft während der normalen Tätigkeit des Personals eine Software auf dem Rechner mit, die die Betätigung der Tastatur bzw. sonstiger Peripheriegeräte und die durch den Benutzer gewählten Menüs bzw. aktiven Programmelemente überwacht und zu Aussagen über die Tätigkeit des Personals in Form von statistischen Kenndaten und Protokollen verarbeitet. Das Verfahren beinhaltet die Möglichkeit, abhängig von der zu überwachenden Tätigkeit eine Auswahl zu treffen, welche Benutzeraktionen kontrolliert werden sollen. Es zeichnet sich dadurch aus, daß es kostengünstig, schwer manipulierbar und auch für Telearbeitsplätze geeignet ist.

## Beschreibung

Die Erfindung betrifft ein Verfahren zur Kontrolle der Tätigkeit von Personen, die an einzelnen oder vernetzten Computern arbeiten.
Um die Bezahlung von Mitarbeitern in eine möglichst gerechte Beziehung zu der geleisteten Arbeit zu bringen, werden heute verschiedene Verfahren zur Abrechnung bzw. zur Kontrolle eingesetzt. Dabei ist die Arbeitsleistung nicht in jeden Fall an sofort sichtbaren Ergebnissen, wie z.B. eine gefertigte Stückzahl von Teilen, zu messen, sondern beinhaltet häufig einen kreativen Anteil. Dies gilt insbesondere für viele Arbeitsplätze an Computern.
Zur Zeit begnügt man sich bei solchen Arbeitsplätzen in der Regel damit, die Anwesenheit des Mitarbeiters zu kontrollieren und überläßt die Kontrolle der Leistung der Aufmerksamkeit des Vorgesetzten.
Zur Kontrolle der Anwesenheit sind heute unterschiedliche Systeme verfügbar, die sich in zwei Kategorien einteilen lassen. Zur ersten Kategorie zählen die verschiedenen Formen der Kamera-Überwachung. Sie hat den Nachteil, daß hierfür wiederum Personal erforderlich ist, um die erzeugten Bilder zu kontrollieren. Außerdem stellt ein solches System eine Totalüberwachung der Mitarbeiter dar, was in der Regel unerwünscht ist.
Die zweite Kategorie von verfügbaren Anwesenheits-Kontrollsystemen sind alle Arten von Zeiterfassungsgeräten. Die unterschiedlichen Ausführungen solcher Geräte basieren sämtlich darauf, daß die Zeitpunkte des Aufenthalts am Arbeitsplatz oder des Beginns bzw. Endes einer Tätigkeit erfaßt und auf irgend einem Medium zur späteren Auswertung registriert werden. Alle diese Geräte haben den Nachteil, daß sie relativ teuer sind und eine aufwendige Installation an einem allgemein zugänglichen Platz erfordern. Vor allem dann, wenn die von dem Gerät erfaßten Daten automatisch einem Auswertesystem zugeführt werden sollen, ist der Installationsaufwand sehr hoch. Es ist offensichtlich, daß diese Geräte nur an solchen Stellen sinnvoll eingesetzt werden können, wo sich eine gewisse Mindestanzahl von Arbeitsplätzen zusammenführen läßt. Für Einzelarbeitsplätze, womöglich außerhalb des Betriebsgeländes, wie dies beispielsweise bei Telearbeitsplätzen der Fall ist, sind sie zu aufwendig. Ein weiterer Nachteil von Zeiterfassungsgeräten ist, daß sie leicht zu täuschen sind. Solche Geräte können nicht sicherstellen, daß ein Mitarbeiter die Zeitregistrierung auch persönlich vornimmt und sind überdies darauf angewiesen, daß er auch seine Abwesenheit vom Arbeitsplatz am Gerät dokumentiert. Somit müssen diese Geräte selbst noch überwacht werden und kommen für Einzelarbeitsplätze außerhalb des Betriebsgeländes, z.B. Telearbeitsplätze, überhaupt nicht in Betracht.

Insgesamt gesehen ist eine Kontrolle von Mitarbeitern mit Hilfe von Zeiterfassungsgeräten in vielen Bereichen schon deswegen unbefriedigend, weil die über die bloße Anwesenheitskontrolle hinausgehende Tätigkeitskontrolle nicht ausreichend anderwärtig abgedeckt werden kann.

Unter Berücksichtigung der aufgezeigten Probleme ist es Aufgabe der Erfindung, ein Verfahren zur Überwachung von Computer-Arbeitsplätzen bereitzustellen, das
a) kostengünstig ist,
b) weniger leicht manipulierbar ist,
c) über die bloße Anwesenheitskontrolle hinaus auch die Tätigkeit des Mitarbeiters kontrolliert ohne ihn jedoch total zu überwachen,
d) sich auch für Einzelarbeitsplätze außerhalb des Betriebes z.B. Telearbeitsplätze eignet und
e) eine leichte Übertragung zu übergeordneten Auswertestationen ermöglicht.

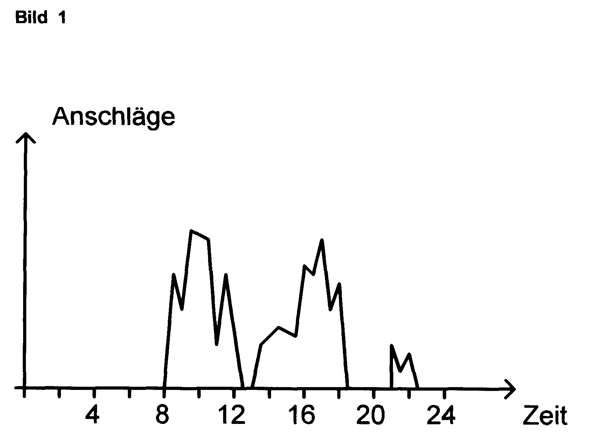

Ein solches Verfahren wird in Patentanspruch 1 der Erfindung formuliert. Darin sollen unter aktiven Programmelementen jene Bedienelemente eines Programms verstanden 'werden, die sich auf der Bildschirmanzeige eines Computers darstellen und vom Bediener mit der Maus oder Tastatur anwählen lassen und die, falls sie angewählt wurden, eine Aktion bei dem betreffenden Programm auslösen.
Wie das Verfahren konkret auszugestalten ist, hängt von derjeweils zugrundeliegenden Hardware und ggf. vom Betriebssystem des Computers ab. Grundsätzlich läßt sich das Verfahren auf jedem Computer realisieren, weil alle Bedienvorgänge mittels Tastatur, Maus oder anderen Peripheriegeräten immer auf dem bedienten Computer Interrupts auslösen, die von einem Überwachungsprogramm gemäß Patentanspruch 1 ausgewertet werden können. Unter Umständen müssen Verfahrensschritte, die sich nicht auf der Ebene der Anwendungsprogramme lösen lassen, in das Betriebssystem integriert werden.
Meldungsorientierte Computer-Betriebssysteme wandeln Interrupts in Ereignismeldungen um und unterstützen eine Kommunikation mit Hilfe von Meldungen zwischen den einzelnen Komponenten des Betriebssystems und denen von Anwendungsprogrammen. Bei solchen Betriebssystemen werden sämtliche Aktionen eines Programms durch Meldungen ausgelöst. Insbesondere erzeugt auch die vom Bedienpersonal angestoßene Auswahl von Menüs, Menüoptionen oder sonstiger aktiver Programmelemente charakteristische Meldungen, zu denen sich ein Überwachungsprogramm über dafür vom Betriebssystem bereitgestellte Funktionen Zugang verschaffen kann. Für die folgende Beschreibung wird ein derartiges Betriebssystem vorausgesetzt. Eine Ausgestaltung des Verfahrens nach Patentanspruch 2 bis 9 kann nun darin bestehen, daß ein Programm oder eine Dynamische Bibliothek (DLL) im Hintergrund des bedienten Computers mitläuft, alle relevanten Meldungen des Systems liest und mit einer Vorgabe gemäß Patentanspruch 4 vergleicht. Gehört die Meldung zu einer registrierenswerten Aktion, so wird die zugehörige Aktion zusammen mit dem Ausführungszeitpunkt protokolliert. Handelt es sich um eine Tastatur- oder Mausklick-Meldung, so wird sie der Ermittlung von statistischen Kenndaten zugeführt, z.B. einer Aufsummierung der entsprechenden Ereignisse innerhalb eines vorgegebenen Zeitintervalls. In weiteren Programmkomponenten wird eine Verschlüsselung der Daten vorgenommen und ggf. eine Übertragung auf einen anderen Rechner für die Auswertung. Eine Ausgabe-Komponente sorgt für die Entschlüsselung und Darstellung der komprimierten Daten in regelmäßigen Zeitabständen. Sinnvoll ist eine zweigliedrige Darstellung. Im ersten Teil werden die statistischen Kenndaten in grafischer Form, wie etwa in Bild 1 ausgegeben. Diese Darstellung gibt Aufschluß über die aktiven Zeiten des Mitarbeiters. Sie hat außerdem gewisse Erscheinungsmerkmale, die für jede Art von Tätigkeit typisch sind. Dies gilt insbesondere dann, wenn die Tätigkeit auch kreative Leistungen beinhaltet.
Im zweiten Teil folgt ein zeitliches Protokoll der während der Tätigkeit durchgeführten Aktionen nach der Vorgabe gemäß Patentanspruch 4. Dieses Protokoll gibt bei sinnvoll gemachten Vorgaben Aufschluß darüber, ob die geforderte oder ggf. eine andere Tätigkeit ausgeübt wurde. Zwischen den beiden Darstellungsformen kann eine Plausibilitätskontrolle durchgeführt werden, indem die Übereinstimmung von Aktiv- und Passiv-Zeiten in beiden Darstellungen verglichen wird.
Eine Zuordnung der ermittelten Kenndaten zum Personal ist möglich, weil sich das Personal bei der Aufnahme der Tätigkeit normalerweise unter Benutzung eines Passwords beim Computer bzw. Netzwerk anzumelden hat.
Das auf die beschriebene Weise realisierte Verfahren erfüllt die oben aufgeführten Kriterien a) bis e), insbesondere ist es kostengünstig und für Telearbeitsplätze geeignet, weil für jeden Arbeitsplatz nur eine zusätzliche Software installiert werden muß.

## Patentansprüche

1. Verfahren zur Kontrolle der Tätigkeit von Personen, die an einzelnen oder vernetzten Computern arbeiten, das realisierbar ist als Überwachungssoftware, die während der normalen Tätigkeit dieser Personen auf dem Computer mitläuft, **dadurch gekennzeichnet,** daß die Überwachungssoftware bei jeder Betätigung irgendeiner Taste der Tastatur oder der Maus oder bei Betätigung sonstiger angeschlossener Eingabegeräte den Zeitpunkt registriert und zusätzlich das Auswählen von bestimmten Menüs oder Menüoptionen oder aktiven Programmelementen mit den zugehörigen Zeitpunkten feststellt, diese Daten komprimiert und zu Aussagen über die Arbeitszeit und Tätigkeit der betreffenden Personen verarbeitet.

2. Verfahren nach Anspruch 1, dadurch gekennzeichnet, daß die erfaßten Daten oder die daraus erzeugten Aussagen zur weiteren Verwertung an einen anderen Computer oder eine andere Auswerteeinheit übertragen werden.

3. Verfahren nach Anspruch 1 oder 2, dadurch gekennzeichnet, daß die erfaßten Daten oder die daraus erzeugten Aussagen zum Schutz vor Manipulation verschlüsselt werden.

4. Verfahren nach einem der Ansprüche 1 bis 3, dadurch gekennzeichnet, daß im voraus eine beliebige Auswahl getroffen werden kann, welche Eingabegeräte bzw. deren Interrupts bzw. deren Ereignismeldungen und welche Menüs oder Menüoptionen oder aktive Programmelemente zu überwachen und auszuwerten sind.

5. Verfahren nach einem der Ansprüche 1 bis 4, dadurch gekennzeichnet, daß die bei der Überwachung erfaßten Daten vollständig oder teilweise zu statistischen Kenndaten zusammengefaßt werden.

6. Verfahren nach Anspruch 5, dadurch gekennzeichnet, daß es sich bei den statistischen Kenndaten um Häufigkeit, Mittelwerte, Varianzen oder Standardabweichungen innerhalb vorgegebener Zeitintervalle von Tastaturanschlägen, Mausklicks oder sonstigen Interrupts oder Ereignismeldungen von Eingabegeräten handelt.

7. Verfahren nach einem der Ansprüche 1 bis 6, dadurch gekennzeichnet, daß die erfaßten Daten oder die daraus erzeugten Aussagen vollständig oder teilweise zu Grafiken verarbeitet werden.

8. Verfahren nach einem der Ansprüche 1 bis 7, dadurch gekennzeichnet, daß die erfaßten Daten zu den gewählten Menüs oder Menüoptionen oder aktiven Programmelementen zu einem Ereignisprotokoll zusammengefaßt werden.

9. Verfahren nach einem der Ansprüche 1 bis 8, dadurch gekennzeichnet, daß zusätzlich überprüft wird, ob sich mehrere erzeugte Kenndaten gegenseitig widersprechen.
